(19) Europäisches Patentamt European Patent Office Office européen des brevets

(11) **EP 4 496 163 A1**

(12) **EUROPEAN PATENT APPLICATION**

(43) Date of publication:
**22.01.2025 Bulletin 2025/04**

(21) Application number: **23382756.7**

(22) Date of filing: **21.07.2023**

(51) International Patent Classification (IPC):
*H02J 3/01* (2006.01)    *H02M 1/12* (2006.01)

(52) Cooperative Patent Classification (CPC):
**H02J 3/01; H02M 1/0025; H02M 1/12; H02M 7/44;**
H02J 2300/24

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Solaqua Riego Solar, S.L.**
**28002 Madrid (ES)**

(72) Inventors:
• **NARVARTE FERNÁNDEZ, Luis**
**E-28108 Madrid (ES)**

• **FERNÁNDEZ RAMOS, José**
**E-29014 Málaga (ES)**
• **GUILLÉN ARENAS, Francisco Jesús**
**E-23690 Frailes - Jaén (ES)**
• **SOLÓRZANO DEL MORAL, Jorge**
**E-28036 Madrid (ES)**

(74) Representative: **ABG Intellectual Property Law, S.L.**
**Avenida de Burgos, 16D**
**Edificio Euromor**
**28036 Madrid (ES)**

(54) **METHOD AND DEVICE FOR OPTIMIZING THE COMMISSIONING AND REGULAR OPERATION OF A PHOTOVOLTAIC IRRIGATION SYSTEM**

(57)    The invention is directed to a method for commissioning a photovoltaic irrigation system, PVIS, providing the Proportional-Integral-Derivative parameters that optimize the control of the system, therefore guaranteeing its stable operation in any weather condition, especially when there are sudden changes in the power supplied. The invention is also directed to a method for optimizing the operation frequency of a PVIS, to a control module for a PVIS, and to a PVIS.

FIG.4

**Description**

## FIELD OF THE INVENTION

This invention lies within the scope of photovoltaic (PV) technologies, more specifically, in relation to methods and control systems to operate with photovoltaic irrigation systems (PVIS). The methods, control device and system according to the present invention can be applied to agricultural and renewable energy fields.

The invention is directed to a method for commissioning a photovoltaic irrigation system, PVIS, providing the Proportional-Integral-Derivative parameters that optimize the control of the system, therefore guaranteeing its stable operation in any weather condition, especially when there are sudden changes in the power supplied. The invention is also directed to a method for optimizing the operation frequency of a PVIS, to a control module for a PVIS, and to a PVIS.

## BACKGROUND

Historically, traditional irrigation systems are supplied by a grid or diesel generator, in order that they can operate in a same duty point, thereby providing constant water flow. On the other hand, conventional PVIS powered only by photovoltaic generators suffer from an important limitation: they can only work during the hours in which there is sufficient photovoltaic power available. In addition, PVIS typically pump a non-constant water flow, since their power depends on solar irradiance and meteorological conditions such as temperature. More details about PVIS can be found in the following reference: M. Alonso Abella et al. (2003). PV water pumping systems based on standard frequency converters. Progress in Photovoltaics: Research and Applications, 11(3), 179-191.

In other words, in PVIS water is elevated by using a pump. The frequency of said pump, and consequently, the water flow is variable and strongly depends on the instantaneous PV power available. Sudden drops in available power, mainly due to shadows on the surface of the photovoltaic generator caused by passing clouds, are especially problematic because they lead to problems that negatively affect both the reliability and lifetime of the PV system. Among these drawbacks, it is worth mentioning water hammer, which can drastically reduce the lifetime of the hydraulic system, and also the undervoltage and overvoltage in the output stage of a variable frequency drive (VFD), which can cause irreversible damage to this component and to the electric motor of the pumps. To avoid these disadvantages, PVIS have a control device, which often comprises a proportional-integral-derivative (PID) control, which is configured to adapt its consumption to the power available in the photovoltaic generator.

The performance of the PID control device depends fundamentally on the accurate setting of the control parameters, that is to say, the values of the proportional gain ($K_p$), the integral gain ($K_i$) and the derivative ($K_d$) gain. This is a complex problem, since PID control is intended to linear systems (which exhibit a linear relationship between control and output variables of said PID system), while PVIS are intrinsically non-linear systems. For this reason, classic tuning methods (in other words, procedures for obtaining the optimal values of the control parameters of the PID controller) do not offer acceptable results when applied to PVIS.

To solve the problem of sudden drops in power available in PVIS that are not optimally tuned, the state-of-the-art provides certain teachings in patent ES2607253 B2. This patent provides a method that mainly consists of disabling the PID control and forcing a fast decrease in the VFD operating frequency. This action prevents the supply voltage falls below a minimum level. Once the supply voltage reaches its normal operating value, PID control is enabled again. However, this approach is complex and would be unnecessary if optimal tuning of the system control parameters is achieved, since this would guarantee correct operation in the event of any incidence in the power supplied by the photovoltaic generator.

In view of the foregoing, there is a need in the state-of-the-art to optimize the control of PVIS systems, thereby ensuring a stable operation irrespective of the weather conditions and without the requirement of using another control system for voltage threshold detection and disable PID control, whose reliability is very dependent on the response time of threshold detectors as well as the processor interruption system.

## DESCRIPTION OF THE INVENTION

The present invention provides a solution for the aforementioned problems, particularly the absence of a reliable method that guarantees a correct tuning of the control parameters of a PVIS. This enables the stable operation of the PVIS in any climatic condition without the need to use photovoltaic generator voltage threshold detection systems and continuously disabling and enabling the PID control system.

In this way, the present invention provides a computer-implemented method for providing optimal Proportional-Integral-Derivative, PID, parameters for a PVIS according to claim 1, a computer-implemented method for calculating an optimal frequency signal for a variable frequency drive, VFD, of a PVIS according to claim 6; a control device for a PVIS according to claim 11; and a photovoltaic irrigation system according to claim 15.

In a first inventive aspect, the invention provides a computer-implemented method for commissioning a photovoltaic irrigation system, PVIS, providing its optimal Proportional-Integral-Derivative, PID, parameters; the PID parameters comprising a proportional gain $K_p$, an integral gain $K_i$, and a derivative gain $K_d$; wherein the method comprises the following steps:

a) receiving a voltage signal, $V_{DC}(t)$, from a voltage sensing element configured to measure the voltage of a photovoltaic generator of the PVIS;

b) establishing a first voltage setpoint, $V_{SP1}$;

c) setting $K_d$ to zero and initializing the other PID parameters as follows:

- setting $K_p$ to zero;
- setting $K_i$ to a predefined value, preferably greater than 1 s$^{-1}$;

d) initializing a total harmonic distortion, THD, parameter and a total square distortion, TSD, parameter as follows:

- setting THD to zero; and
- setting TSD to zero;

e) generating or receiving a sinusoidal signal, $f_{SIN}(t)$;

f) generating a first frequency signal, $f_{first}(t)$, that represents the variable frequency at which a variable frequency drive, VFD, of the PVIS operates:

$$f_{first}(t) = f_{SIN}(t) + K_P \cdot (V_{DC}(t) - V_{SP1}) + K_i \cdot \int (V_{DC}(t) - V_{SP1}) \cdot dt$$

g) calculating the THD of the first frequency signal as follows:

$$THD(\%) = 100 \cdot \frac{\sqrt{\sum_{i=2}^{n} H_i^2}}{H_1}$$

wherein $H_i$ corresponds to the amplitude of the i-th harmonic of the first frequency signal and $H_1$ is the amplitude corresponding to the fundamental frequency of the first frequency signal;

h) comparing the current value of THD with the previous value of THD;

- if the current value of THD is less than the previous value of THD, increasing the value of $K_i$ and repeating the method from step e);
- if not, continue the method in step i);

i) generating or receiving a triangular signal, $f_{TRI}(t)$;

j) generating a second frequency signal, $f_{sec}(t)$, that represents the variable frequency at which the VFD operates:

$$f_{sec}(t) = f_{TRI}(t) + K_P \cdot (V_{DC}(t) - V_{SP1}) + K_i \cdot \int (V_{DC}(t) - V_{SP1}) \cdot dt$$

k) calculating the TSD of the second frequency signal as follows:

$$TSD(\%) = 100 \cdot \sqrt{\sum_{i=2}^{n} \left( \frac{Hs_{(2i-1)}}{Hs_1} - \frac{H_{(2i-1)}}{H_1} \right)^2}$$

where $H_s$ is the amplitude of the odd harmonics of a square signal and $H$ is the amplitude of the harmonics of the second frequency signal, being $H_{s1}$ and $H_1$ the amplitudes corresponding to the fundamental frequency of the square signal and the second frequency signal, respectively;

l) comparing the current value of TSD with the previous value of TSD;

- if the current value of TSD is less than the previous value of TSD, increasing the value of $K_p$ and repeating the method from step i);
- if not, continue the method in step m);

m) comparing the current values of $K_i$ and $K_p$ with the previous values of $K_i$ and $K_p$;, respectively, so that

    i. if the values are equal, providing the current values of $K_d$, $K_i$ and $K_p$ as the optimal PID parameters;
    ii. if not, repeating the method with a new iteration from step d) on.

A complete PVIS operation process comprises two different phases: 1) commissioning (start-up of the PVIS) and 2) regular operation. Start-up is ideally done only once at the beginning of the system's useful life (or when there are changes in any of its components) and comprises obtaining the optimal values of the control parameters $K_d$, $K_p$ and $K_i$, according to the method of the first inventive aspect. Once these control parameters have been set by the claimed method, the PVIS can begin the regular operation until an update of the system is required.

The method of the invention is executed by a PID controller of a PVIS, which has processing capabilities and comprises a memory to save the value of the optimal PID parameters. The PID controller receives a voltage signal $V_{DC}(t)$ from at least one voltage sensing element, the voltage signal corresponding to the voltage of a photovoltaic generator as a function of time. The PID controller is configured to generate disturbance signals (sinusoidal and triangular signals) or to receive such signals from an external disturbance signal generator system. In the first case, the PID controller comprises a disturbance signal generator or any other computational system able to generate the disturbance signals. In the second case, the signals are applied from the external disturbance signal generator system to the feedforward input of the PID controller.

In the state of the art, the use of the feedforward input in PID controllers is twofold. The first one is to achieve a faster response to setpoint changes of a certain system controlled by said PID controller. The second use, which is less frequent, is to compensate for disturbances that occur at the input of a process carried out in the system before the PID controller acts to eliminate them.

On the contrary, in the present invention, the feedforward input is used in a completely new way. On one hand, the feedforward input is not used to compensate for real disturbances obtained by means of sensor, but rather artificial disturbances, which are specifically designed (sinusoidal and triangular signals), are added to such feedforward input. Throughout this document, "artificial disturbances" will be understood as signals generated by a signal generator or other computational system, not signals measured by real sensors.

On the other, the method of the first inventive aspect is not executed during normal operation of the PVIS, but during the process of tuning the PID parameters, prior to the regular system operation. Therefore, artificial disturbances are not used during the regular operation of the PVIS as in the state of the art, but during the start-up phase for obtaining the optimal PID parameters.

The method of the invention is based on the analysis of the response of the PVIS supply voltage when disturbance signals are generated or received, and applied to the feedforward input of the PID controller. At least two disturbance signals are taken into account: a sinusoidal and a triangular signal. The method calculates the total harmonic distortion (THD) of the response to the sinusoidal signal, as well as the total square distortion (TSD) of the response to the triangular signal. The method is iterative, and it alternatively computes values of the THD and the TSD for different values of $K_i$ and $K_p$. Eventually, the method ends when minimum values for the two distortions are obtained. Particularly, the definitive value of $K_i$ is the one that provides the minimum THD, while the final value of $K_p$ corresponds to the one that provides the minimum TSD.

In this way, the method of the first inventive aspect is an automatic tuning method that obtains the optimal values of the PID control parameters by means of the generation of signals (sinusoidal and triangular) representing artificial disturbances, the calculation of the total harmonic distortion (THD) and total square distortion (TSD) of the disturbed voltage signal (voltage of the photovoltaic generator mixed with the artificial disturbances) and the modification of the values of these PID parameters iteratively until the optimal values are obtained.

As mentioned before, the PID parameters comprise a proportional gain $K_p$, an integral gain $K_i$, and a derivative gain $K_d$. In this method, the derivative gain is always set to zero. Cancelling such derivative gain is performed because photovoltaic irrigation systems inherently generate a large amount of electromagnetic noise that is very difficult to eliminate, especially when using VFDs. The derivative component is very sensitive to this type of noise so, if the derivative gain is considered during PID parameter optimization, the risk of PVIS instability is increased, and the number of iterations needed to achieve convergence is also considerably incremented.

Therefore, the PID controller is a PI (Proportional-Integral) controller in the context of the invention. Throughout the present specification, PID and PI are used interchangeably.

More in detail, the method begins with the PID controller of the PVIS receiving a voltage signal, $V_{DC}(t)$ from a voltage sensing element and establishing a first voltage setpoint.

Preferably, the first voltage setpoint is established from said voltage signal. In other embodiment, the first voltage setpoint is established taken into account the temperature. In other embodiment, the voltage setpoint is also established taken into account the level of solar irradiance.

In an embodiment, the first voltage setpoint $V_{SP1}$ is considered as constant since its variation during the commissioning phase (which takes about 30 minutes to be accomplished) can be considered as negligible.

In a preferred embodiment, the first voltage setpoint $V_{SP1}$ will be understood as the voltage of the photovoltaic generator at which such photovoltaic generator achieves its maximum power value during the commissioning phase. In other words, the photovoltaic generator provides its maximum power value, at the current irradiance and temperature conditions, when its operating voltage is equal to the setpoint. For any other voltage value, it will always generate a lower power.

Next, the PID controller initializes the proportional gain $K_p$ and the integral gain $K_i$ of the PID parameters. In particular, $K_p$ is set to zero and $K_i$ is given a predefined value, preferably greater than 1 s$^{-1}$, more preferably between 5 and 10 s$^{-1}$; and more preferably 10 s$^{-1}$. As mentioned before, the PID controller further sets the derivative gain $K_d$ to zero. This initialization ensures proper operation in stable weather conditions.

The PID controller continues calculating the frequency signal at which the VFD of the PVIS operates and sends this frequency signal to the VFD, preferably through an analog or digital communication interface.

Throughout this document, the VFD will be understood as a type of power regulator that drives an electric motor, in this case the motor of a pumping unit, by varying the frequency and voltage of its output. Throughout this document, a pumping unit will be understood as an element of a PVIS configured to pour water, comprising the electric motor driven by the VFD. The operating frequency of the pumping unit is the same as the operating frequency of the VFD so that the pumping unit pours water at a rate defined by the operating frequency.

To calculate the frequency signal for the VFD, the control module generates or receives the feedforward input signals (artificial disturbance signals). This feedforward input signal, as mentioned before, can be a sinusoidal signal $f_{SIN}$ or a triangular signal $f_{TRI}$ that are combined with the voltage signal $V_{DC}(t)$, the first voltage setpoint $V_{SP1}$, and the PID parameters, thus obtaining the operating frequency of the VFD.

Firstly, the feedforward input signal is sinusoidal, resulting the frequency signal as follows:

$$f_{first}(t) = f_{SIN}(t) + K_P \cdot (V_{DC}(t) - V_{SP1}) + K_i \cdot \int (V_{DC}(t) - V_{SP1}) \cdot dt$$

Throughout the whole document, the variable "(t)" in the formulas denotes the time.

The PID controller calculates the THD of this first frequency signal and perform a comparison:

- if it is the first time the THD is calculated, it compares its value with 0.
- If it is not, it compares the current THD with the value obtained in the previous calculation.

If the current value of the THD is less than the previous value, the process is repeated increasing the value of $K_i$ and keeping the value of $K_p$ constant.

When the current THD value is greater than the previous value, the PID controller generates or receives a triangular signal as the feedforward input signal, resulting in a second frequency signal calculated as follows:

$$f_{sec}(t) = f_{TRI}(t) + K_P \cdot (V_{DC}(t) - V_{SP1}) + K_i \cdot \int (V_{DC}(t) - V_{SP1}) \cdot dt$$

The PID controller calculates the TSD of the second frequency signal and perform a comparison:

- if it is the first time the TSD is calculated, it compares its value with 0.
- If it is not, it compares the current TSD with the value obtained in the previous calculation.

If the current value of the TSD is less than the previous value, the process is repeated increasing the value of $K_p$ and keeping the value of $K_i$ constant.

When the current TSD value is greater than the previous value, it sets $K_p$ to its previous value and starts a new iteration of the method.

Finally, the method ends when the value of $K_p$ and the value of $K_i$ obtained in one iteration matches these values when they were obtained in the previous iteration.

At this point, the PID parameters are saved in the PID controller and the commissioning phase is finished.

In an embodiment, at least n=100 harmonics order are considered for computing the THD and/or the TSD.

In an embodiment, the increments of $K_i$ and $K_p$ are equal or greater than $\Delta K_i = 1\ s^{-1}$ and $\Delta K_p = 0.05$. In an embodiment, the increments of $K_i$ and $K_p$ are, as much, $\Delta K_i = 2\ s^{-1}$ and $\Delta K_p = 0.2$. In other embodiment, $\Delta K_i$ and $\Delta K_p$ are adjusted in a variable way.

The greater the increments are, the faster the algorithm converges, at the cost of losing precision in the calculation of $K_i$ and $K_p$.

The execution of the method is continuously controlled in such a way that the voltage of the photovoltaic generator is always between the maximum and minimum values allowed by the VFD, so that the VFD never stops. Attention is drawn to the fact that when any of these maximum/minimum values is exceeded, an alarm is produced in the VFD and the PVIS stops instantaneously, thereby causing an abrupt stop in the pumping unit. Advantageously, the method of the invention prevents such abrupt stops in the pumping unit.

The method of the first inventive aspect, therefore, provides the following advantages with respect to the conventional solutions:

- The tuning of the PID parameters procedure (commissioning phase) is completely automatic, so that the intervention of qualified personnel is not required for its execution.
- The PVIS always works in a stable zone throughout the process, contrary to classical tuning methods (including open-loop and closed-loop methods), which force the system to operate at the limit of the stable zone, thus compromising its lifetime.

Although this method for automatically providing the optimal values of the PID parameters has been explained for the particular case of a photovoltaic irrigation system, it can be applied in other non-linear systems wherein there are no global optimal control values. In a non-linear system, different optimal control parameters can be assigned to each of the regions of the system that are linearized.

In an embodiment, the sinusoidal and/or the triangular signals, $f_{SIN}(t)$ and $f_{TRI}(t)$, has/have an amplitude equal to the maximum output frequency value of the VFD (5) and a period greater than or equal to 5 seconds.

In an embodiment, the square signal can have any frequency and amplitude as the ratio of any harmonic of any square signal to its fundamental frequency is constant.

In an embodiment, the method is executed in stable irradiance conditions.

Throughout this document, a period of time with stable irradiance conditions will be understood as a period of time in which the variation of irradiance is less than 5% of its initial value.

In an embodiment, the first voltage setpoint $V_{SP1}$ is established in step b) to a voltage corresponding to the voltage of the photovoltaic generator at which the photovoltaic generator provides its maximum power.

In an embodiment, establishing the first voltage setpoint $V_{SP1}$ in step b) is performed using a maximum power point tracking algorithm.

In this embodiment, the first voltage setpoint $V_{SP1}$ is established to the voltage of the photovoltaic generator at which the photovoltaic generator provides its maximum power using a type of maximum power point tracking algorithm.

An example of maximum power point tracking algorithm for establishing the first voltage setpoint $V_{SP1}$ is known as "perturb and observe", in which the photovoltaic generator voltage is increased/decreased periodically in a small amount and the power is measured. If the power increases, the voltage continues to increase/decrease in the same direction until the power no longer increases.

The smaller the increment/decrement is, the more accurate is the value obtained for the first voltage setpoint $V_{SP1}$, at the cost of a longer computational time.

In a more specific example, the increment/decrement is constant and it is inside the range of 2 - 5 volts. In an alternative specific example, the increment/decrement is variable and it reaches a maximum value of 20 volts.

Examples of other maximum power point tracking algorithms are Incremental Conductance, Current Sweep, Constant Voltage or Temperature Method.

In an embodiment, the photovoltaic generator comprises a plurality of strings of photovoltaic modules, each photovoltaic module comprising a plurality of cells and having a point of maximum power.

In this embodiment, establishing the first voltage setpoint $V_{SP1}$ in step b) takes into account the measures of a temperature sensing element, which is configured to measure the temperature of the photovoltaic generator, as follows:

$$V_{SP1} = N \cdot (V_{max} + n \cdot (T_c - T_{ref}) \cdot \frac{dVoc}{dT})$$

wherein

- N is the number of photovoltaic modules in series of each string of the photovoltaic generator;
- n is the number of cells in series in each of the photovoltaic modules;
- $V_{max}$ is the voltage in the point of maximum power of one of the photovoltaic modules, in conditions of 25 °C and 1000 W/m$^2$;
- $dV_{oc}/dT$ is the voltage variation with temperature in open circuit of one of the photovoltaic cells of the photovoltaic modules; and
- $T_c$ is the temperature of the photovoltaic generator in °C, measured by the temperature sensing element, and
- $T_{ref}$ is a temperature reference of 25°C.

In this embodiment, the first voltage setpoint is established as a function of the characteristics of the photovoltaic generator and its temperature.

The method can be executed in different conditions of temperature. Due to the non-linear nature of PVIS, different optimal values of the PID parameters may be obtained in each of them. In this way, the method of the invention advantageously provides a really efficient adaptive control, as the PID controller modifies the value of PID gains and the first voltage setpoint depending on the weather conditions, particularly the temperature, at each moment.

In an embodiment, the parameters $V_{max}$ and/or $dV_{oc}/dT$ are provided by the photovoltaic modules manufacturers. In an embodiment, the parameters N and/or n are known from the photovoltaic generator specifications.

In an embodiment, the temperature $T_c$ is considered as constant since its variation during the commissioning phase (which takes about 30 minutes to be accomplished) can be considered as negligible.

In an embodiment, establishing the first voltage setpoint $V_{SP1}$ in step b) further takes into account the measures of an irradiance sensing element, which is configured to measure the level of solar irradiance that affects the photovoltaic generator, as follows:

$$V_{SP1} = N \cdot \left[ V_{max} + n \cdot \left( (T_C - T_{ref}) \cdot \frac{dV_{oc}}{dT} + \ln\left(\frac{G}{1000}\right) \cdot \frac{k \cdot (T_C + 273)}{q} \right) \right]$$

wherein:

- G is the level of solar irradiance that affects the photovoltaic generator (1) measured by the irradiance sensing element (4.3);
- k is the Boltzmann constant $1.380649 \cdot 10^{-23}$ J·K$^{-1}$, and
- q is the magnitude of the electron charge $1.6 \cdot 10^{-19}$ C.

In this embodiment, the first voltage setpoint is established as a function of the characteristics of the photovoltaic generator, its temperature, and the level of solar irradiance that affects the photovoltaic generator.

The method can be executed in different conditions of irradiance. Due to the non-linear nature of PVIS, different optimal values of the PID parameters may be obtained in each of them. In this way, the method of the invention advantageously provides a really efficient adaptive control, as the PID controller modifies the value of PID gains and the first voltage setpoint depending on the weather conditions, particularly the solar irradiance, at each moment.

In an embodiment, the level of solar irradiance is considered as constant since its variation during the commissioning phase (which takes about 30 minutes to be accomplished) can be considered as negligible.

In a second inventive aspect, the invention provides a computer-implemented method for calculating an optimal frequency signal for a variable frequency drive, VFD, of a photovoltaic irrigation system, PVIS, the method comprising:

1) providing the optimal Proportional-Integral-Derivative, PID, parameters for a the PVIS, by executing any of the embodiments of the method of the first inventive aspect;
2) receiving a voltage signal, $V_{DC}(t)$, from a voltage sensing element configured to measure the voltage of a photovoltaic generator of the PVIS;
3) establishing a second voltage setpoint, $V_{SP2}$;
4) calculating the optimal frequency signal, $f_{opt}(t)$:

$$f_{opt}(t) = K_P \cdot (V_{DC}(t) - V_{SP2}) + K_i \cdot \int (V_{DC}(t) - V_{SP2}) \cdot dt$$

wherein:

- $K_p$ and $K_i$ are the optimal PID parameters obtained in step 1).

As mentioned before, a complete PVIS operation process comprises two different phases: 1) commissioning (start-up of the PVIS) and 2) regular operation. The start-up of the PVIS comprises obtaining the optimal values of the control parameters $K_d$, $K_p$ and $K_i$, according to the method of the first inventive aspect. Once these control parameters have been set by the claimed method, the PVIS can begin the regular operation until an update of the system is required.

The method of the second inventive aspect is focused on the regular operation phase. During such regular operation, the feedforward input is zero and the operating frequency for the VFD, and therefore, of the pumping unit, is equal to the output of the PID controller. The objective of the control is to maximize the available photovoltaic power, i.e. to apply the highest possible frequency to the pumping unit. This value is critical, because the power consumed by the pumping unit is related to the cube of its operating frequency, so even a slight increase in frequency above its maximum value would require an increase in power that the photovoltaic generator would not be able to provide. When a photovoltaic generator is required to provide more power than it can supply, its response is to reduce its voltage very quickly. This could cause an undervoltage alarm in the VFD, and a sudden stop of the water pumping. Advantageously, the claimed method avoids sudden pumping interruptions.

In the method of the second inventive aspect, the PID controller firstly commissions the PIVS by obtaining the optimal PID parameters using the iterative method of the first inventive aspect (according to any of its embodiments) to ensure that the PIVS always operates at a stable working point. Throughout the whole document, a stable working point for the PVIS will be understood as a configuration of said PVIS wherein the voltage of the photovoltaic generator always has a value larger than a minimum voltage allowed by the VFD, as well as said voltage of the photovoltaic generator is always lower than a maximum voltage admitted by the VFD.

Next, the PID controller receives again the voltage signal, $V_{DC}(t)$, from a voltage sensing element configured to measure the voltage of the photovoltaic generator of the PVIS and establishes a second voltage setpoint $V_{SP2}$ .

Preferably, the second voltage setpoint $V_{SP2}$ is stablished from said voltage signal. In other embodiment, the second voltage setpoint $V_{SP2}$ is established taken into account the temperature. In other embodiment, the second voltage setpoint $V_{SP2}$ is also established taken into account the level of solar irradiance.

In an embodiment, the second voltage setpoint $V_{SP2}$ is updated periodically.

In a preferred embodiment, the second voltage setpoint $V_{SP2}$ will be understood as the voltage of the photovoltaic generator at which such photovoltaic generator achieves its maximum power value during the regular operation phase. In other words, the photovoltaic generator provides its maximum power value, at the current irradiance and temperature conditions, when its operating voltage is equal to the setpoint. For any other voltage value, it will always generate a lower power.

Finally, the PID controller provides the optimal frequency at which the VFD and the pumping unit operate; that is, the optimal frequency operation of the PVIS.

$$f_{opt}(t) = K_P \cdot (V_{DC}(t) - V_{SP2}) + K_i \cdot \int (V_{DC}(t) - V_{SP2}) \cdot dt$$

Along the time, the PID controller reduces the operating frequency of the VFD when the voltage of the photovoltaic generator is lower than the second voltage setpoint and increase the operating frequency of the VFD when the voltage of the photovoltaic generator is higher than the second voltage setpoint. Any variation in the value of some physical magnitudes of the system (hydraulic pressure, hydraulic head, temperature, irradiance, etc.) initially cause a change in the photovoltaic generator voltage that the PID controller compensates. Such compensation is performed by modifying the value of the frequency sent to the VFD, so that this voltage is always kept near the second voltage setpoint.

In an embodiment, a voltage "near" the second voltage setpoint should be understood as a voltage value in a margin of $\pm 5$ % the value of said second voltage setpoint.

In an embodiment, the values of the previous expressions are updated in a period of time between 2.5 ms and 10 ms.

In an embodiment, the second voltage setpoint $V_{SP2}$ is established to a voltage corresponding to the voltage of the photovoltaic generator at which the photovoltaic generator provides its maximum power value.

In an embodiment, establishing the second voltage setpoint $V_{SP2}$ in step 3) of the method is performed using a maximum power point tracking algorithm.

In this embodiment, the second voltage setpoint $V_{SP2}$ is established to the voltage of the photovoltaic generator at which the photovoltaic generator provides its maximum power using a type of maximum power point tracking algorithm.

An example of maximum power point tracking algorithm for establishing the second voltage setpoint $V_{SP2}$ is known as "perturb and observe", in which the photovoltaic generator voltage is increased/decreased periodically in a small amount and the power is measured. If the power increases, the voltage continues to increase/decrease in the same direction until the power no longer increases.

The smaller the increment/decrement is, the more accurate is the value obtained for the second voltage setpoint $V_{SP2}$, at the cost of a longer computational time.

In a more specific example, the increment/decrement is constant and it is inside the range of 2 - 5 volts. In an alternative specific example, the increment/decrement is variable and it reaches a maximum value of 20 volts.

Examples of other maximum power point tracking algorithms are Incremental Conductance, Current Sweep, Constant Voltage or Temperature Method.

In a more particular embodiment, the second voltage setpoint is updated periodically by repeating the maximum power point tracking algorithm.

In an embodiment, the photovoltaic generator comprises a plurality of strings of photovoltaic modules, each photovoltaic module comprising a plurality of cells and having a point of maximum power.

In this embodiment, establishing the second voltage setpoint $V_{SP2}$ in step 3) takes into account the measures of a temperature sensing element, which is configured to measure the temperature of the photovoltaic generator, as follows:

$$V_{SP2} = N \cdot \left(V_{max} + n \cdot \left(T_c - T_{ref}\right) \cdot \frac{dVoc}{dT}\right)$$

wherein

- N is the number of photovoltaic modules in series of each string of the photovoltaic generator;
- n is the number of cells in series in each of the photovoltaic modules;
- $V_{max}$ is the voltage in the point of maximum power of one of the photovoltaic modules, in conditions of 25 °C and 1000 W/m$^2$;
- $dV_{oc}/dT$ is the voltage variation with temperature in open circuit of one of the photovoltaic cells of the photovoltaic modules;
- $T_c$ is the temperature of the photovoltaic generator in °C, measured by the temperature sensing element; and
- $T_{ref}$ is a temperature of reference of 25°C.

In this embodiment, the second voltage setpoint is established as a function of the characteristics of the photovoltaic generator and its temperature.

The method of this embodiment allows carrying out the regular operation phase in different conditions of temperature optimally. As mentioned before, due to the non-linear nature of PVIS, different optimal values of the PID parameters may be obtained for different temperatures and, in the same way, variations in the second voltage setpoint due to differences in temperature may be taken into account. In this way, the method of the invention advantageously provides a really efficient adaptive control, as the PID controller modifies the value of PID gains and the second voltage setpoint depending on the weather conditions, particularly the temperature, at each moment.

In an embodiment, the parameters $V_{max}$ and/or $dV_{oc}/dT$ are provided by the photovoltaic modules manufacturers. In an embodiment, the parameters N and/or n are known from the photovoltaic generator specifications.

In a more particular embodiment, the second voltage setpoint is updated periodically using the formula above.

In an embodiment, establishing the second voltage setpoint $V_{SP2}$ in step 3) further takes into account the measures of an irradiance sensing element, which is configured to measure the level of solar irradiance that affects the photovoltaic generator, as follows:

$$V_{SP2} = N \cdot \left[V_{max} + n \cdot \left((T_C - T_{ref}) \cdot \frac{dV_{oc}}{dT} + \ln\left(\frac{G}{1000}\right) \cdot \frac{k \cdot (T_C + 273)}{q}\right)\right]$$

wherein:

- G is the level of solar irradiance that affects the photovoltaic generator measured by the irradiance sensing element;
- k is the Boltzmann constant $1.380649 \cdot 10^{-23}$ J·K$^{-1}$; and
- q is the magnitude of the electron charge $1.6 \cdot 10^{-19}$ C.

In this embodiment, the second voltage setpoint is established as a function of the characteristics of the photovoltaic generator, its temperature, and the level of solar irradiance that affects the photovoltaic generator.

The method of this embodiment allows carrying out the regular operation phase in different conditions of irradiance and temperature optimally. As mentioned before, due to the non-linear nature of PVIS, different optimal values of the PID parameters may be obtained for different levels of solar irradiance and, in the same way, variations in the second voltage setpoint due to differences in the temperature and the level of solar irradiance may be taken into account. In this way, the method of the invention advantageously provides a really efficient adaptive control, as the PID controller modifies the value of PID gains and the second voltage setpoint depending on the weather conditions, particularly the irradiance and the temperature, at each moment.

In a more particular embodiment, the second voltage setpoint is updated periodically using the formula above.

In a third inventive aspect, the invention provides a control device for a photovoltaic irrigation system, PVIS, comprising:

- at least one photovoltaic generator configured to generate a direct current electric power signal;
- at least one variable frequency drive, VFD, being connectable to a pumping unit;
- at least one voltage sensing element configured to measure the voltage of the at least one photovoltaic generator; and
- a control module;

wherein

- the at least one photovoltaic generator is further configured to send the direct current electric power signal to the at least one VFD;
- the control module is configured to calculate an optimal frequency signal executing any of the embodiments of the method of the second inventive aspect; wherein the step 2) of the method is performed by receiving a voltage signal, $V_{DC}(t)$, from the at least one voltage sensing element; and
- the at least one VFD is configured to

  ◦ receive the optimal frequency signal from the control module;
  ◦ transform the direct current electric power signal into an alternating current with variable frequency according to the optimal frequency signal received; and
  ◦ send the alternating current to the pumping unit.

The control device of the third inventive aspect comprises at least one photovoltaic generator; at least one VFD powered by the at least one photovoltaic generator and being connectable to a water pump that pours water; at least one voltage sensing element to measure the voltage of the photovoltaic generator and a control module, i.e. a PID controller.

The control module is configured to execute the method of the second inventive aspect (any of the embodiments thereof) allowing the PIVS to operate at the second voltage setpoint, which preferably corresponds to the voltage at which the photovoltaic generator achieves its maximum power value. The control module is configured to receive the output voltage of the photovoltaic generator measured by the voltage sensing element and to execute the PID control by reducing the operating frequency of the VFD when the voltage of the photovoltaic generator is lower than the second voltage setpoint or by increasing the operating frequency of the VFD when the voltage is higher than the second voltage setpoint. This operating frequency of the VFD, besides, corresponds to the operating frequency of the motor of the pumping unit that pours the water.

The control device of the third inventive aspect, advantageously, has the ability to reduce the frequency of the VFD with the same speed with which there is a sudden drop in the power supplied by the photovoltaic generator, as for example when the shadow of a cloud covers part or all of its surface (a typical example is a fall of 800 W/m$^2$ in three seconds, which represents approximately a drop of 70% of the maximum operation power in those three seconds).

If the control device did not have this ability, the voltage of the photovoltaic generator would drop below the lower limit allowed by the VFD, causing an alarm signal and an abrupt stop of the pump. This sudden stop can have very negative consequences on both the hydraulic and electrical systems and can dramatically reduce the lifetime of the PVIS.

This ability of the control device depends on the correct setting of the PID parameters, which is properly performed by said control device thanks to the execution of step 1) of the method of the second inventive aspect. Such step corresponds to the commissioning phase of the PVIS.

Regarding the voltage sensing element, it preferably provides a voltage signal in accordance with industry standards, with a range of 0-10 V or 4-20 mA. A typical voltage sensing element measures a voltage on the photovoltaic generator between 0 and 1000 V and provides a 0 V output for a 0 V input and a 10 V output for a 1000 V input, with linear relationship between the two measurements.

In an embodiment, the control module comprises:

- a programmable logic controller, PLC; or
- a PLC and a disturbance signal generator; or
- a PLC and a programmable digital system; or

- a PLC, a disturbance signal generator and a programmable digital system.

In an embodiment, the control module comprises a PLC. In this embodiment, the PLC executes the whole method of the second inventive aspect.

For properly executing the method, the PLC requires receiving the disturbance signals (sinusoidal and triangular) from an external disturbance signal generator system or any other computational system, being such signals applied to the feedforward input of the PLC.

In an embodiment, the control module comprises the PLC and a disturbance signal generator. In this embodiment, the disturbance signal generator module provides the disturbance signals (sinusoidal and triangular) to the PLC, being such signals applied to the feedforward input of the PLC.

In an embodiment, the control module comprises a PLC and a programmable digital system configured to carry out the step 1) of the method of the second inventive aspect. In this embodiment, the PLC does not execute the whole method of the second inventive aspect. On the contrary, the programmable digital system is the one that executes step 1) of the method of the second inventive aspect; that is, this system is in charge of the method for tuning the PID parameters automatically (commissioning phase).

This programmable digital system, preferably, is an independent computer connected to the PLC by through a communications interface, which can be analog or digital. Alternatively, it can be physically implemented in the PLC itself.

The programmable digital system may be further configured to generate the disturbance signals and to apply such disturbance signals to the feedforward input of the PLC. Alternatively, the disturbance signals needed for the PLC are generated by an external disturbance signal generator system (or any other computational system).

In an embodiment, the control module comprises the PLC, a disturbance signal generator and a programmable digital system configured to carry out the step 1) of the method of the second inventive aspect.

This embodiment is similar than the previous one with the exception that the control device further comprises a disturbance signal generator, which is in charge of providing the disturbance signals (sinusoidal and triangular) to the PLC, being such signals applied to the feedforward input of the PLC.

In an embodiment, the control device further comprises at least one temperature sensing element configured to measure the temperature of the photovoltaic generator; wherein the control module is further configured to

- receive the temperature of the photovoltaic generator from the at least one temperature sensing element; and
- execute step 1) of the method of the second inventive aspect by establishing the first voltage setpoint, $V_{SP1}$, taking into account the temperature of the photovoltaic generator; and/or

execute step 3) of the method of the second inventive aspect by establishing the second voltage setpoint, $V_{SP2}$, taking into account the temperature of the photovoltaic generator.

In this embodiment, the first voltage setpoint, corresponding to the commissioning phase of the PVIS, and/or the second voltage setpoint, corresponding to the regular operation phase of the PVIS, are calculated taken into account the temperature measurements of the temperature sensing element. In an embodiment, the voltage setpoints are calculated as follows:

$$V_{SP1,}V_{SP2} = N \cdot (V_{max} + n \cdot \left(T_c - T_{ref}\right) \cdot \frac{dVoc}{dT})$$

Wherein $T_c$ is the temperature of the photovoltaic generator in °C, measured by the at least one temperature sensing element. The rest of the parameters were properly defined above in the present specification.

In this way, the control device of this embodiment allows carrying out the commissioning phase and/or the regular operation phase of the PVIS in different conditions of temperature optimally. As mentioned before, due to the non-linear nature of PVIS, different optimal values of the PID parameters may be obtained for different temperatures and, in the same way, variations in the voltage setpoints due to differences in temperature may be taken into account.

Advantageously, the control device allows the PIVS to operate at voltage setpoints corresponding to the voltage at which the photovoltaic generator provides its maximum power, regardless the weather conditions.

In this embodiment, a typical temperature sensing element has a range of-20°C to 150°.

In an embodiment, the control device further comprises at least one irradiance sensing element configured to measure the level of solar irradiance that affects the photovoltaic generator; wherein the control module is further configured to

- receive the level of solar irradiance that affects the photovoltaic generator from the at least one irradiance sensing element; and

- execute step 1) of the method of the second inventive aspect by establishing the first voltage setpoint, $V_{SP1}$, further taking into account the level of solar irradiance that affects the photovoltaic generator; and/or

execute step 3) of the method of the second inventive aspect by establishing the second voltage setpoint, $V_{SP2}$, further taking into account the level of solar irradiance that affects the photovoltaic generator.

In this embodiment, the first voltage setpoint, corresponding to the commissioning phase of the PVIS, and/or the second voltage setpoint, corresponding to the regular operation phase of the PVIS, are calculated taken into account the temperature measurements of the temperature sensing element and the irradiance measurements of the irradiance sensing element. In an embodiment, the voltage setpoints are calculated as follows:

$$V_{SP1,}V_{SP2} = N \cdot \left[ V_{max} + n \cdot \left( (T_C - T_{ref}) \cdot \frac{dV_{oc}}{dT} + \ln\left(\frac{G}{1000}\right) \cdot \frac{k \cdot (T_C + 273)}{q} \right) \right]$$

Wherein $T_c$ is the temperature of the photovoltaic generator in °C, measured by the at least one temperature sensing element and G is the level of solar irradiance that affects the photovoltaic generator measured by the irradiance sensing element. The rest of the parameters were properly defined above in the present specification.

In this way, the control device of this embodiment allows carrying out the commissioning phase and/or the regular operation phase of the PIVS in different conditions of temperature and irradiance optimally. As mentioned before, due to the non-linear nature of PVIS, different optimal values of the PID parameters may be obtained for different levels of irradiance and temperature and, in the same way, variations in the voltage setpoints due to differences in the level of irradiance and temperature may be taken into account.

Advantageously, the control device allows the PIVS to operate at voltage setpoints corresponding to the voltage at which the photovoltaic generator provides its maximum power, regardless the weather conditions.

In this embodiment, a typical irradiance sensing element has a range of 0 to 1250W/m2.

In a fourth inventive aspect, the invention provides a photovoltaic irrigation system, PVIS, comprising:

- the control device according to any of the embodiments of the third inventive aspect; and
- a pumping unit configured to receive an alternating current from the variable frequency drive of the control device and to pour water at a rate defined by the alternating current.

Finally, the invention also provides a complete photovoltaic irrigation system comprising the control device of the third inventive aspect that, in turn, executes the method of the second inventive aspect. The step 1) of this method corresponds to the method of the first inventive aspect (commissioning of the PVIS).

The PVIS of this fourth inventive aspect further comprises a pumping unit that receives an optimal frequency of operation so that such pumping unit pours water at a rate defined by the frequency of the alternating current.

An example of pumping unit is a centrifugal water pump driven by an electric motor.

All features described in this specification, including the claims, description and drawings, can be combined in any way except for combinations of mutually exclusive features.

## DESCRIPTION OF THE DRAWINGS

To complement this description and with the aim of helping a better understanding of the characteristics of the invention, in accordance with specific embodiments, the following figures are attached as an integral part of said description where, for illustrative purposes and not limiting, the following has been represented:

Figure 1    This figure shows a flowchart of a computer-implemented method for commissioning a PVIS according to an embodiment of the invention. The flowchart depicts the steps needed to obtain the optimal PID parameters for the PVIS.

Figure 2    This figure shows a flowchart of a computer-implemented method for calculating the optimal operation frequency of a VFD of the PVIS according to an embodiment of the present invention.

Figures 3a-3c    These figures show a control device of a PVIS according to several embodiments of the present invention.

Figure 4    This figure shows a PVIS comprising the control device according to an embodiment of the invention and a pumping unit.

## DETAILED DESCRIPTION OF THE INVENTION

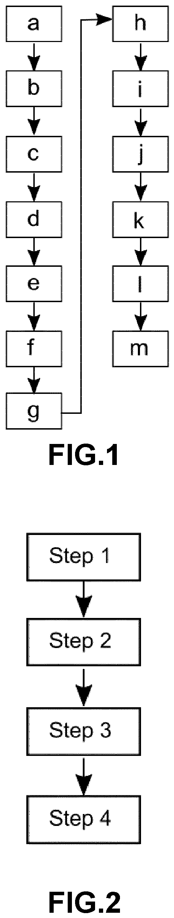

Figure 1 shows a flowchart of a computer-implemented method (100) for commissioning a PVIS (10). The flowchart depicts the steps needed to obtain the optimal PID parameters for the PVIS (10) commissioning. The PID parameters comprises a proportional gain $K_p$, an integral gain $K_i$, and a derivative gain $K_d$.

As it can be seen, the method (100) comprises the following steps:

a) receiving a voltage signal, $V_{DC}(t)$, from a voltage sensing element (4.1) configured to measure the voltage of a photovoltaic generator (1) of the PVIS (10);

b) establishing a first voltage setpoint, $V_{SP1}$;

c) setting $K_d$ to zero and initializing the other PID parameters as follows:

- setting $K_p$ to zero;
- setting $K_i$ to a predefined value, preferably greater than $1s^{-1}$;

d) initializing a total harmonic distortion, THD, parameter and a total square distortion, TSD, parameter as follows:

- setting THD to zero; and
- setting TSD to zero;

e) generating or receiving a sinusoidal signal, $f_{SIN}(t)$;

f) generating a first frequency signal, $f_{first}(t)$, that represents the variable frequency at which a variable frequency drive (5), VFD, of the PVIS (10) operates:

$$f_{first}(t) = f_{SIN}(t) + K_P \cdot (V_{DC}(t) - V_{SP1}) + K_i \cdot \int (V_{DC}(t) - V_{SP1}) \cdot dt$$

g) calculating the THD of the first frequency signal as follows:

$$THD(\%) = 100 \cdot \frac{\sqrt{\sum_{i=2}^{n} H_i^2}}{H_1}$$

wherein $H_i$ corresponds to the amplitude of the i-th harmonic of the first frequency signal and $H_1$ is the amplitude corresponding to the fundamental frequency of the first frequency signal;

h) comparing the current value of THD with the previous value of THD;

- if the current value of THD is less than the previous value of THD, increasing the value of $K_i$ and repeating the method from step e);
- if not, continue the method in step i);

i) generating or receiving a triangular signal, $f_{TRI}(t)$;

j) generating a second frequency signal, $f_{sec}(t)$, that represents the variable frequency at which the VFD (5) operates:

$$f_{sec}(t) = f_{TRI}(t) + K_P \cdot (V_{DC}(t) - V_{SP1}) + K_i \cdot \int (V_{DC}(t) - V_{SP1}) \cdot dt$$

k) calculating the TSD of the second frequency signal as follows:

$$TSD(\%) = 100 \cdot \sqrt{\sum_{i=2}^{n} \left( \frac{Hs_{(2i-1)}}{Hs_1} - \frac{H_{(2i-1)}}{H_1} \right)^2}$$

where $H_s$ is the amplitude of the odd harmonics of a square signal and H is the amplitude of the harmonics of the second frequency signal, being $H_{s1}$ and $H_1$ the amplitudes corresponding to the fundamental frequency of the square signal and the second frequency signal, respectively;

l) comparing the current value of TSD with the previous value of TSD;

- if the current value of TSD is less than the previous value of TSD, increasing the value of $K_p$ and repeating the method from step i);
- if not, continue the method in step m);

m) comparing the current values of $K_i$ and $K_p$ with the previous values of $K_i$ and $K_p$;, respectively, so that

    i. if the values are equal, providing the current values of $K_d$, $K_i$ and $K_p$ as the optimal PID parameters;
    ii. if not, repeating the method with a new iteration from step d) on.

In an example, n=100 harmonics are considered to compute THD and TSD. However, this value can be modified.

The idea underlying the PID parameters tuning method set out above is alternatively trying to lower the THD as much as possible by corrections in $K_i$ gain, and then lowering the TSD by introducing $K_p$ corrections. Advantageously, this iterative tuning method allows obtaining the optimal values of the PID control parameters which ensure that the PVIS always operates at a stable working point.

In an example, the method (100) is executed in stable irradiance conditions.

In an example, the sinusoidal and/or the triangular signals ($f_{SIN}(t)$, $f_{TRI}(t)$), has/have an amplitude equal to the maximum output frequency value of the VFD (5) and a period greater than or equal to 5 seconds.

In an example, the first voltage setpoint $V_{SP1}$ is established to a voltage corresponding to the voltage of the photovoltaic generator (1) at which the photovoltaic generator (1) provides its maximum power value.

In an example, establishing the first voltage setpoint $V_{SP1}$ in step b) is performed using a maximum power point tracking algorithm.

In an example, the photovoltaic generator (1) comprises a plurality of strings of photovoltaic modules, and each photovoltaic module comprises a plurality of cells and has a point of maximum power. In this example, establishing the first voltage setpoint $V_{SP1}$ in step b) further takes into account the measures of a temperature sensing element (4.2), which is configured to measure the temperature of the photovoltaic generator (1), as follows:

$$V_{SP1} = N \cdot \left(V_{max} + n \cdot \left(T_c - T_{ref}\right) \cdot \frac{dVoc}{dT}\right)$$

wherein

- N is the number of photovoltaic modules in series of each string of the photovoltaic generator (1);
- n is the number of cells in series in each of the photovoltaic modules;
- $V_{max}$ is the voltage in the point of maximum power of one of the photovoltaic modules, in conditions of 25 °C and 1000 W/m$^2$;
- $dV_{oc}/dT$ is the voltage variation with temperature in open circuit of one of the photovoltaic cells of the photovoltaic modules;
- $T_c$ is the temperature of the photovoltaic generator in °C, measured by the temperature sensing element (4.2); and
- $T_{ref}$ is a temperature of reference of 25°C.

The parameters $V_{max}$ and $\frac{dV_{oc}}{dT}$ are provided by the manufacturer of the photovoltaic modules. The parameters N and n depends on the photovoltaic generator (1) specifications. Particular values of these parameters are listed below:

N= 17, n=36, $V_{max}$ = 16.3 V, $\frac{dV_{oc}}{dT}$ = -2,2 mV/°C .

In an example, establishing the first voltage setpoint $V_{SP1}$ in step b) further takes into account the measures of an irradiance sensing element (4.3), which is configured to measure the level of solar irradiance that affects the photovoltaic generator (1), as follows:

$$V_{SP1} = N \cdot \left[ V_{max} + n \cdot \left( (T_C - T_{ref}) \cdot \frac{dV_{oc}}{dT} + \ln\left(\frac{G}{1000}\right) \cdot \frac{k \cdot (T_C + 273)}{q} \right) \right]$$

wherein:

- G is the level of solar irradiance that affects the photovoltaic generator (1) measured by the irradiance sensing element (4.3);
- k is the Boltzmann constant $1.380649 \cdot 10^{-23}$ $J \cdot K^{-1}$; and
- q is the magnitude of the electron charge $1.6 \cdot 10^{-19}$ C.

*Example of execution of the PID parameters tuning method*

The following table shows the experimental results obtained by applying the method (100):

| Iteration number | 1 | 2 | 3 | 4 | 5 |
|---|---|---|---|---|---|
| $K_i$ ($s^{-1}$) (at the end of the iteration) | 22 | 22 | 23 | 23 | 23 |
| $K_p$ (at the end of the iteration) | 0 | 1.00 | 1.00 | 0.95 | 0.95 |

According to the previous table, the method (100) has needed five iterations to obtain the optimal values of $K_p$ and $K_i$, thereby ending when the gains results obtained in one iteration coincide with those of the previous one.

As it can be seen, the increments of $K_i$ and $K_p$ have been: $\Delta K_i = 1$ $s^{-1}$ and $\Delta K_p = 0.05$. In other example, the increment $\Delta K_i$ is between 1 $s^{-1}$ and 2 $s^{-1}$. In other example, the increment $\Delta K_p$ is between 0.05 and 0.2. In other examples, $\Delta K_i$ and $\Delta K_p$ are different, and they can be adjusted in a variable way.

Figure 2 shows a flowchart of a computer-implemented method (200) for calculating an optimal frequency signal for a VFD (5) of a PVIS (10). As it can be seen, the method (200) comprises:

1) providing the optimal Proportional-Integral-Derivative, PID, parameters for a PVIS by executing the method (100) of the first inventive aspect, for example the one shown in Figure 1;
2) receiving a voltage signal, $V_{DC}(t)$, from a voltage sensing element (4.1) configured to measure the voltage of a photovoltaic generator (1) of the PVIS (10);
3) establishing a second voltage setpoint; and
4) calculating the optimal frequency signal, $f_{opt}(t)$:

$$f_{opt}(t) = K_P \cdot (V_{DC}(t) - V_{SP2}) + K_i \cdot \int (V_{DC}(t) - V_{SP2}) \cdot dt$$

wherein:

- $K_p$ and $K_i$ are the optimal PID parameters obtained in step 1).

In this method (200), the PID controller (3) firstly commissions the PIVS (10) by obtaining the optimal PID parameters using the iterative method (100) of the first inventive aspect; for example the method shown in Figure 1, to ensure that the PIVS (10) always operates at a stable working point.

The objective of the method (200) is to provide the optimal frequency at which the VFD (5) and the pumping unit (6) operate; that is, the optimal frequency operation of the PVIS (10).

The method (200) allows that the PID controller (3) can reduce the operating frequency of the VFD (5) when the voltage of the photovoltaic generator (1) is lower than the second voltage setpoint and increase the operating frequency of the VFD (5) when the voltage of the photovoltaic generator (1) is higher than the second voltage setpoint.

In an example, the second voltage setpoint $V_{SP2}$ is established to a voltage corresponding to the voltage of the photovoltaic generator (1) at which the photovoltaic generator (1) provides its maximum power value.

In an example, establishing the second voltage setpoint $V_{SP2}$ in step 3) is performed using a maximum power point tracking algorithm.

In an example, the photovoltaic generator (1) comprises a plurality of strings of photovoltaic modules, each photovoltaic module comprising a plurality of cells and having a point of maximum power. In this example, establishing the second voltage setpoint $V_{SP2}$ in step 3) takes into account the measures of a temperature sensing element (4.2), which is configured to measure the temperature of the photovoltaic generator (1), as follows:

$$V_{SP2} = N \cdot (V_{max} + n \cdot (Tc - T_{ref}) \cdot \frac{dVoc}{dT})$$

wherein

- N is the number of photovoltaic modules in series of each string of the photovoltaic generator (1);
- n is the number of cells in series in each of the photovoltaic modules;
- $V_{max}$ is the voltage in the point of maximum power of one of the photovoltaic modules, in conditions of 25 °C and 1000 W/m²;
- $dV_{oc}/dT$ is the voltage variation with temperature in open circuit of one of the photovoltaic cells of the photovoltaic modules;
- Tc is the temperature of the photovoltaic generator in °C (1), measured by the temperature sensing element (4.2); and
- $T_{ref}$ is a temperature of reference of 25°C.

In an example, establishing the second voltage setpoint $V_{SP2}$ in step 3) further takes into account the measures of an irradiance sensing element (4.3), which is configured to measure the level of solar irradiance that affects the photovoltaic generator (1), as follows:

$$V_{SP2} = N \cdot \left[ V_{max} + n \cdot \left( (T_C - T_{ref}) \cdot \frac{dV_{oc}}{dT} + \ln\left(\frac{G}{1000}\right) \cdot \frac{k \cdot (T_C + 273)}{q} \right) \right]$$

wherein:

- G is the level of solar irradiance that affects the photovoltaic generator (1) measured by the irradiance sensing element (4.3);
- k is the Boltzmann constant $1.380649 \cdot 10^{-23}$ J·K$^{-1}$; and
- q is the magnitude of the electron charge $1.6 \cdot 10^{-19}$ C.

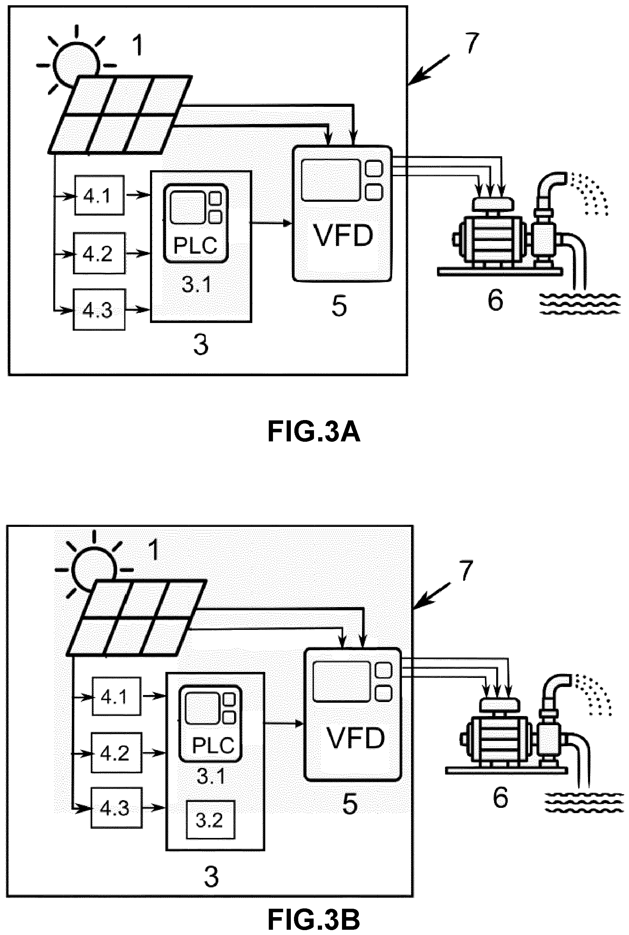

Figures 3a-3c illustrate a block diagram of the architecture of a control device (7) for a photovoltaic irrigation system (PVIS) according to several embodiments of the invention.
Figure 3a shows a control device (7) for the PVIS (10), PVIS, comprising:

- one photovoltaic generator (1) configured to generate a direct current electric power signal;
- one variable frequency drive (5), VFD, being connectable to a pumping unit (6);
- one voltage sensing element (4.1) configured to measure the voltage of the photovoltaic generator (1); and
- a control module (3);

wherein

- the photovoltaic generator (1) is further configured to send the direct current electric power signal to the VFD (5);
- the control module (3) is configured to calculate an optimal frequency signal executing the method second inventive aspect (as the one shown in Figure 2); wherein the step 2) of the method is performed by receiving a voltage signal, $V_{DC}(t)$, from the voltage sensing element (4.1); and
- the VFD (5) is configured to

  ○ receive the optimal frequency signal from the control module (3);
  ○ transform the direct current electric power signal into an alternating current with variable frequency according to the optimal frequency signal received; and
  ○ send the alternating current to the pumping unit (6).

As it can be seen, the photovoltaic generator (1) sends the direct current electric power signal to the VFD (5). The VFD (5), in turn, receives the optimal frequency signal from the control module (3); transforms the direct current electric power signal into an alternating current with variable frequency according to the optimal frequency signal received; and sends the alternating current to the pumping unit (6).

The control device (3) allows the PVIS (10) to operate at a first voltage setpoint during the commissioning phase of the PVIS and at a second voltage setpoint during the regular operation of the PVIS. Preferably, both setpoints correspond to a voltage of the photovoltaic generator (1) at which said photovoltaic generator (1) provides its maximum power. More preferably, the setpoints are established regardless of weather conditions.

In an example, the second voltage setpoint is periodically updated.

During the commissioning phase, the control device (3) is configured to receive the value of the output voltage of the photovoltaic generator (1), which is measured by the voltage sensing element (4.1). Then, said control device (3):

- reduces the operating frequency of the VFD (5) when the voltage of the photovoltaic generator (1) is lower than the first voltage setpoint; or
- increases the operating frequency of the VFD (5) when the voltage is higher than the first voltage setpoint.

In the same way, during the regular operation phase, the control device (3) is configured to receive the value of the output voltage of the photovoltaic generator (1), which is measured by the voltage sensing element (4.1). Then, said control device (3):

- reduces the operating frequency of the VFD (5) when the voltage of the photovoltaic generator (1) is lower than the second voltage setpoint; or
- increases the operating frequency of the VFD (5) when the voltage is higher than the second voltage setpoint.

In Figure 3a, besides, it is shown that the control device (7) further comprises temperature sensing element (4.2) configured to measure the temperature of the photovoltaic generator (1). The control module (3) receives the temperature of the photovoltaic generator (1) from the temperature sensing element (4.2) and such temperature is taken into account during the execution of the method (200) of the second inventive aspect to establish the first voltage setpoint and/or the second voltage setpoint. This temperature sensing element (4.2) are optional.

In Figure 3a, besides, it is depicted that the control device (7) further comprises irradiance sensing element (4.3) configured to measure the level of solar irradiance that affects the photovoltaic generator (1). In this case, the control module (3) receives the level of solar irradiance that affects the photovoltaic generator (1) from the irradiance sensing element (4.3) and such irradiance is taken into account during the execution of the method (200) of the second inventive aspect to establish the first voltage setpoint and/or the second voltage setpoint. This irradiance sensing element (4.3) are optional.

In an example, the voltage sensing element (4.1) measures the voltage of the photovoltaic generator (1) between 0 and 1000 V, and to provide a 0V output for a 0V input, and a 10V output for a 1000V input, with a linear relationship between inputs and outputs.

In an example, the temperature sensing element (4.2) measures the temperature of the photovoltaic generator (1) in a range of -20°C to 150°. The output range of these elements (4.2) is set to the range 0 to 10 V, in the same manner as the voltage sensing elements (4.1) do.

In an example, the irradiance sensing elements (4.3) detect a range of incident intensity from 0 to 1250 W/m$^2$. The output range of these elements (4.2) is set to the range 0 to 10 V, in the same manner as the voltage sensing elements (4.1) do. Examples of irradiance sensing elements (4.3) are photovoltaic pyranometers and silicon-based sensors.

The control module (3), in the example of Figure 3a, requires receiving the artificial disturbance signals (sinusoidal and triangular signals) from an external disturbance signal generation system or any other external computational system, such signals being applied to the feedforward input signal of the PLC (3.1).

Figure 3b shows the control device (7) of Figure 3a, but further comprising a disturbance signal generator module (3.2).

In this example, the disturbance signal generator module (3.2) provides the artificial disturbance signals (sinusoidal and triangular) to the PLC (3.1), being such signals applied to the feedforward input of the PLC (3.1).

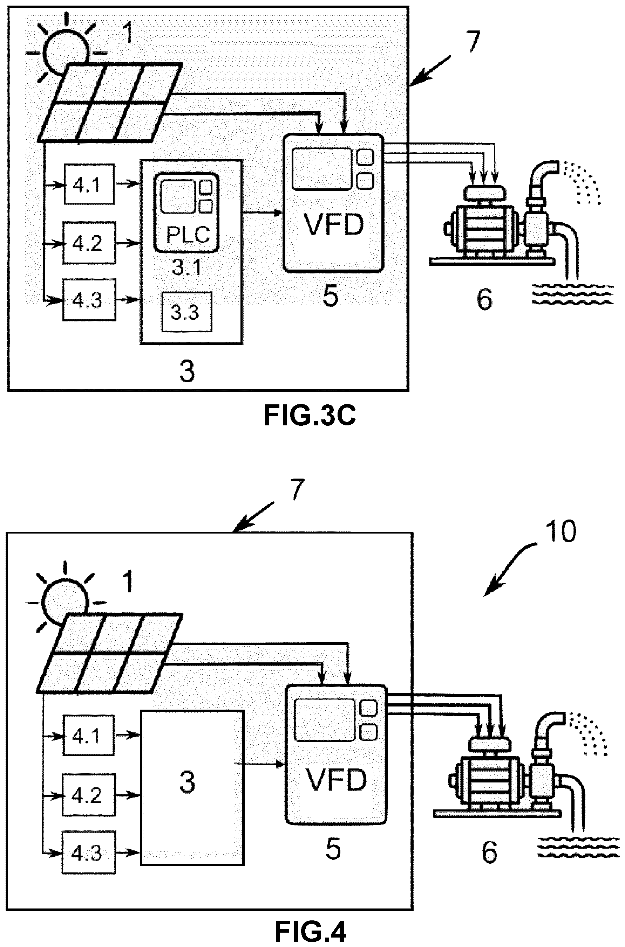

Figure 3c shows the control device (7) of Figure 3a, but further comprising a programmable digital system (3.3) configured to carry out the step 1) of the method (200) of the second inventive aspect, as the one shown in Figure 2.

In this embodiment, the PLC (3.1) does not execute the whole method (200) of the second inventive aspect, as the one shown in Figure 2, but rather the programmable digital system (3.3) is configured to carry out the step 1) of the same (200); that is, this system (3.3) is in charge of the method (100) for tuning the PID parameters automatically (commissioning phase).

This programmable digital system (3.3), preferably, is an independent computer connected to the PLC (3.1) through a communications interface (such as RS-232, GPIB, etc.), which can be analog or digital. Alternatively, it can be physically implemented in the PLC (3.1) itself.

The programmable digital system (3.3) may be further configured to generate the disturbance signals and to apply such disturbance signals to the feedforward input of the PLC (3.1). Alternatively, the disturbance signals needed for the PLC (3.1) are generated by an external disturbance signal generator system (or any other external computational system) or by a disturbance signal generator module (3.2) comprised in the control module (3), which is not shown In Figure 3c.

It should be noted that the pumping unit (6), in Figures 3a-c, does not form part of the control device (3).

Figure 4 shows a PVIS (10) comprising a control device (3) and a pumping unit (6). Such pumping unit (6), for example, a centrifugal water pump, is driven by an electric motor and is in charge of pouring the water. The VFD (5) comprises three-phase output connected to the at least one pumping unit (6).

_Electrical specification_ of _an example of PIVS_

In a particular example, the PVIS comprises:

- A photovoltaic generator (1) with 352 V of open circuit voltage, 2.72 A of short circuit current and 680 W of maximum power, all of these values measured under standard conditions.
- A control device (3) which comprises:

    ○ a PLC (3.1) with ARM® Cortex® processor,
    ○ an analog-to-digital converter with 16-bit resolution,
    ○ a digital-to-analog converter with 12-bit resolution, and
    ○ a USB communications interface, and
    ○ a programmable digital system (3.3); in this case, a personal computer with Python software.

- A plurality of sensing elements comprising:

    ○ a voltage sensing element (4.1) with an input range of 0-1000 V,
    ○ an irradiance sensing element (4.2) with an input range of 0-1250 W/m$^2$; and
    ○ a temperature sensing element (4.3) with an input range of -20 to 150 °C. The output range of all these sensing elements (4.1., 4.2, 4.3) is set to the range 0 to 10 V.

- A VFD (5) with 200-240 V three-phase alternating input voltage and 0.75 kW of maximum power.
- A pumping unit (6) comprising a centrifugal pump driven by a three-phase asynchronous motor with nominal voltage of 200 V, nominal frequency of 50 Hz and nominal power of 275 W. The pumping unit (6) is connected to the VFD (5).

**Claims**

1. A computer-implemented method (100) for commissioning a photovoltaic irrigation system (10), PVIS, providing its optimal Proportional-Integral-Derivative, PID, parameters; the PID parameters comprising a proportional gain $K_p$, an integral gain $K_i$, and a derivative gain $K_d$; wherein the method comprises the following steps:

    a) receiving a voltage signal, $V_{DC}(t)$, from a voltage sensing element (4.1) configured to measure the voltage of a photovoltaic generator (1) of the PVIS (10);
    b) establishing a first voltage setpoint, $V_{SP1}$;
    c) setting $K_d$ to zero and initializing the other PID parameters as follows:

        - setting $K_p$ to zero;
        - setting $K_i$ to a predefined value, preferably greater than 1s$^{-1}$;

    d) initializing a total harmonic distortion, THD, parameter and a total square distortion, TSD, parameter as follows:

        - setting THD to zero; and
        - setting TSD to zero;

    e) generating or receiving a sinusoidal signal, $f_{SIN}(t)$;
    f) generating a first frequency signal, $f_{first}(t)$, that represents the variable frequency at which a variable frequency drive (5), VFD, of the PVIS (10) operates:

$$f_{first}(t) = f_{SIN}(t) + K_P \cdot (V_{DC}(t) - V_{SP1}) + K_i \cdot \int (V_{DC}(t) - V_{SP1}) \cdot dt$$

g) calculating the THD of the first frequency signal as follows:

$$THD(\%) = 100 \cdot \frac{\sqrt{\sum_{i=2}^{n} H_i^2}}{H_1}$$

wherein $H_i$ corresponds to the amplitude of the i-th harmonic of the first frequency signal and $H_1$ is the amplitude corresponding to the fundamental frequency of the first frequency signal;

h) comparing the current value of THD with the previous value of THD;

- if the current value of THD is less than the previous value of THD, increasing the value of $K_i$ and repeating the method from step e);
- if not, continue the method in step i);

i) generating or receiving a triangular signal, $f_{TRI}(t)$;

j) generating a second frequency signal, $f_{sec}(t)$, that represents the variable frequency at which the VFD (5) operates:

$$f_{sec}(t) = f_{TRI}(t) + K_P \cdot (V_{DC}(t) - V_{SP1}) + K_i \cdot \int (V_{DC}(t) - V_{SP1}) \cdot dt$$

k) calculating the TSD of the second frequency signal as follows:

$$TSD(\%) = 100 \cdot \sqrt{\sum_{i=2}^{n} \left( \frac{Hs_{(2i-1)}}{Hs_1} - \frac{H_{(2i-1)}}{H_1} \right)^2}$$

where $H_S$ is the amplitude of the odd harmonics of a square signal and $H$ is the amplitude of the harmonics of the second frequency signal, being $H_{s1}$ and $H_1$ the amplitudes corresponding to the fundamental frequency of the square signal and the second frequency signal, respectively;

l) comparing the current value of TSD with the previous value of TSD;

- if the current value of TSD is less than the previous value of TSD, increasing the value of $K_p$ and repeating the method from step i);
- if not, continue the method in step m);

m) comparing the current values of $K_i$ and $K_p$ with the previous values of $K_i$ and $K_p$;, respectively, so that

i. if the values are equal, providing the current values of $K_d$, $K_i$ and $K_p$ as the optimal PID parameters;
ii. if not, repeating the method with a new iteration from step d) on.

**2.** The method (100) according to claim 1, wherein the first voltage setpoint $V_{SP1}$ is established in step b) to a voltage corresponding to the voltage of the photovoltaic generator (1) at which the photovoltaic generator (1) provides its maximum power value.

**3.** The method (100) according to the previous claim, wherein establishing the first voltage setpoint $V_{SP1}$ in step b) is performed using a maximum power point tracking algorithm.

**4.** The method (100) according to claim 2, wherein the photovoltaic generator (1) comprises a plurality of strings of photovoltaic modules, each photovoltaic module comprising a plurality of cells and having a point of maximum power; and

wherein establishing the first voltage setpoint $V_{SP1}$ in step b) takes into account the measures of a temperature sensing element (4.2), which is configured to measure the temperature of the photovoltaic generator (1), as follows:

$$V_{SP1} = N \cdot (V_{max} + n \cdot (T_c - T_{ref}) \cdot \frac{dVoc}{dT})$$

wherein

- N is the number of photovoltaic modules in series of each string of the photovoltaic generator (1);
- n is the number of cells in series in each of the photovoltaic modules;
- $V_{max}$ is the voltage in the point of maximum power of one of the photovoltaic modules, in conditions of 25 °C and 1000 W/m$^2$;
- $dV_{oc}/dT$ is the voltage variation with temperature in open circuit of one of the photovoltaic cells of the photovoltaic modules;
- $T_c$ is the temperature of the photovoltaic generator in °C (1), measured by the temperature sensing element (4.2); and
- $T_{ref}$ is a temperature of reference of 25°C.

5. The method (100) according to the previous claim, wherein establishing the first voltage setpoint $V_{SP1}$ in step b) further takes into account the measures of an irradiance sensing element (4.3), which is configured to measure the level of solar irradiance that affects the photovoltaic generator (1), as follows:

$$V_{SP1} = N \cdot \left[ V_{max} + n \cdot \left( (T_C - T_{ref}) \cdot \frac{dV_{oc}}{dT} + \ln\left(\frac{G}{1000}\right) \cdot \frac{k \cdot (T_C + 273)}{q} \right) \right]$$

wherein:

- G is the level of solar irradiance that affects the photovoltaic generator (1) measured by the irradiance sensing element (4.3);
- k is the Boltzmann constant $1.380649 \cdot 10^{-23}$ J·K$^{-1}$; and
- q is the magnitude of the electron charge $1.6 \cdot 10^{-19}$ C.

6. A computer-implemented method (200) for calculating an optimal frequency signal for a variable frequency drive (5), VFD, of a photovoltaic irrigation system (10), PVIS, the method (200) comprising:

1) providing the optimal Proportional-Integral-Derivative, PID, parameters for a the PVIS, by executing the method (100) of any of the previous claims;
2) receiving a voltage signal, $V_{DC}(t)$, from a voltage sensing element (4.1) configured to measure the voltage of a photovoltaic generator (1) of the PVIS (10);
3) establishing a second voltage setpoint, $V_{SP2}$; and
4) calculating the optimal frequency signal, $f_{opt}(t)$:

$$f_{opt}(t) = K_P \cdot (V_{DC}(t) - V_{SP2}) + K_i \cdot \int (V_{DC}(t) - V_{SP2}) \cdot dt$$

wherein:

- $K_p$ and $K_i$ are the optimal PID parameters obtained in step 1).

7. The method (200) according to claim 6, wherein the second voltage setpoint $V_{SP2}$ is established to a voltage corresponding to the voltage of the photovoltaic generator (1) at which the photovoltaic generator (1) provides its maximum power value.

8. The method (200) according to the previous claim, wherein establishing the second voltage setpoint $V_{SP2}$ in step 3) is performed using a maximum power point tracking algorithm.

9. The method (200) according to claim 7, wherein the photovoltaic generator (1) comprises a plurality of strings of photovoltaic modules, each photovoltaic module comprising a plurality of cells and having a point of maximum power; and

wherein establishing the second voltage setpoint $V_{SP2}$ in step 3) takes into account the measures of a temperature sensing element (4.2), which is configured to measure the temperature of the photovoltaic generator (1), as follows:

$$V_{SP2} = N \cdot (V_{max} + n \cdot (T_c - T_{ref}) \cdot \frac{dVoc}{dT})$$

wherein

- N is the number of photovoltaic modules in series of each string of the photovoltaic generator (1);
- n is the number of cells in series in each of the photovoltaic modules;
- $V_{max}$ is the voltage in the point of maximum power of one of the photovoltaic modules, in conditions of 25 °C and 1000 W/m$^2$;
- $dV_{oc}/dT$ is the voltage variation with temperature in open circuit of one of the photovoltaic cells of the photovoltaic modules;
- $T_c$ is the temperature of the photovoltaic generator in °C (1), measured by the temperature sensing element (4.2); and
- $T_{ref}$ is a temperature of reference of 25°C.

10. The method (200) according to the previous claim, wherein establishing the second voltage setpoint $V_{SP2}$ in step 3) further takes into account the measures of an irradiance sensing element (4.3), which is configured to measure the level of solar irradiance that affects the photovoltaic generator (1), as follows:

$$V_{SP2} = N \cdot \left[ V_{max} + n \cdot \left( (T_C - T_{ref}) \cdot \frac{dV_{oc}}{dT} + \ln\left(\frac{G}{1000}\right) \cdot \frac{k \cdot (T_C + 273)}{q} \right) \right]$$

wherein:

- G is the level of solar irradiance that affects the photovoltaic generator (1) measured by the irradiance sensing element (4.3);
- k is the Boltzmann constant $1.380649 \cdot 10^{-23}$ J·K$^{-1}$; and
- q is the magnitude of the electron charge $1.6 \cdot 10^{-19}$ C.

11. A control device (7) for a photovoltaic irrigation system (10), PVIS, comprising:

- at least one photovoltaic generator (1) configured to generate a direct current electric power signal;
- at least one variable frequency drive (5), VFD, being connectable to a pumping unit (6);
- at least one voltage sensing element (4.1) configured to measure the voltage of the at least one photovoltaic generator (1); and
- a control module (3);

wherein

• the at least one photovoltaic generator (1) is further configured to send the direct current electric power signal to the at least one VFD (5);
• the control module (3) is configured to calculate an optimal frequency signal executing the method according to any of claims 6-10; wherein the step 2) of the method is performed by receiving a voltage signal, $V_{DC}(t)$, from the at least one voltage sensing element (4.1); and
• the at least one VFD (5) is configured to

  ◦ receive the optimal frequency signal from the control module (3);
  ◦ transform the direct current electric power signal into an alternating current with variable frequency according to the optimal frequency signal received; and

○ send the alternating current to the pumping unit (6).

**12.** The control device (7) according to claim 11, wherein the control module (3) comprises:

- a programmable logic controller (3.1), PLC; or
- a PLC (3.1) and a disturbance signal generator (3.2); or
- a PLC (3.1) and a programmable digital system (3.3); or
- a PLC (3.1), a disturbance signal generator (3.2) and a programmable digital system (3.3).

**13.** The control device (7) according to any of claims 11-12, further comprising at least one temperature sensing element (4.2) configured to measure the temperature of the photovoltaic generator (1);
wherein the control module (3) is further configured to

- receive the temperature of the photovoltaic generator (1) from the at least one temperature sensing element (4.2); and
- execute step 1) of the method (200) by establishing the first voltage setpoint, $V_{SP1}$, taking into account the temperature of the photovoltaic generator (1); and/or execute step 3) of the method (200) by establishing the second voltage setpoint, $V_{SP2}$, taking into account the temperature of the photovoltaic generator (1).

**14.** The control device (7) according to the previous claim, the control device (7) further comprising at least one irradiance sensing element (4.3) configured to measure the level of solar irradiance that affects the photovoltaic generator (1);
wherein the control module (3) is further configured to

- receive the level of solar irradiance that affects the photovoltaic generator (1) from the at least one irradiance sensing element (4.3); and
- execute step 1) of the method (200) by establishing the first voltage setpoint, $V_{SP1}$, further taking into account the level of solar irradiance that affects the photovoltaic generator (1); and/or

execute step 3) of the method (200) by establishing the second voltage setpoint, $V_{SP2}$, further taking into account the level of solar irradiance that affects the photovoltaic generator (1).

**15.** A photovoltaic irrigation system (10), PVIS, comprising:

- the control device (7) according to any of claims 11-14; and
- a pumping unit (6) configured to receive an alternating current from the variable frequency drive (5) of the control device (7) and to pour water at a rate defined by the alternating current.

FIG.1

FIG.2

**FIG.3A**

**FIG.3B**

**FIG.3C**

**FIG.4**

Europäisches
Patentamt
European
Patent Office
Office européen
des brevets

# EUROPEAN SEARCH REPORT

Application Number

EP 23 38 2756

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | NOUAITI AYOUB ET AL: "Single phase seven-level inverter for PV solar pumping system", 2016 INTERNATIONAL RENEWABLE AND SUSTAINABLE ENERGY CONFERENCE (IRSEC), IEEE, 14 November 2016 (2016-11-14), pages 474-478, XP033123999, DOI: 10.1109/IRSEC.2016.7983944 [retrieved on 2017-07-18] * figures 1,10 * | 1-15 | INV. H02J3/01 H02M1/12 |
| A | SADASIVAM P ET AL: "Analysis of subsystems behaviour and performance evaluation of solar photovoltaic powered water pumping system", 2013 IEEE 39TH PHOTOVOLTAIC SPECIALISTS CONFERENCE (PVSC), IEEE, 16 June 2013 (2013-06-16), pages 2932-2937, XP032568506, DOI: 10.1109/PVSC.2013.6745080 [retrieved on 2014-02-19] * figures 1,9 * | 1-15 | |
| A | US 9 436 201 B1 (TEIRELBAR AHMED [EG] ET AL) 6 September 2016 (2016-09-06) * figure 2 * | 1-15 | TECHNICAL FIELDS SEARCHED (IPC)<br><br>H02J<br>H02M |

The present search report has been drawn up for all claims

| Place of search | Date of completion of the search | Examiner |
|---|---|---|
| Munich | 5 February 2024 | Ramcke, Ties |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

...................................................................................

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**                    EP 23 38 2756

This annex lists the patent family members relating to the patent documents cited in the above-mentioned European search report.
The members are as contained in the European Patent Office EDP file on
The European Patent Office is in no way liable for these particulars which are merely given for the purpose of information.

05-02-2024

| Patent document cited in search report | | Publication date | Patent family member(s) | | Publication date |
|---|---|---|---|---|---|
| US 9436201 | B1 | 06-09-2016 | US | 9436201 B1 | 06-09-2016 |
| | | | WO | 2016198949 A2 | 15-12-2016 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- ES 2607253 B2

**Non-patent literature cited in the description**

- **M. ALONSO ABELLA et al.** PV water pumping systems based on standard frequency converters. *Progress in Photovoltaics: Research and Applications*, 2003, vol. 11 (3), 179-191